# EUROPEAN PATENT APPLICATION

(11) **EP 4 280 787 A1**
(43) Date of publication of application: **22.11.2023**
(21) Application number: 21918580.8
(22) Date of filing: 15.01.2021
(51) Int. Cl.: H04W 74/08

(54) **INDICATION METHOD AND APPARATUS FOR BLIND RETRANSMISSION OF RANDOM ACCESS MESSAGE**

(71) Applicant: Beijing Xiaomi Mobile Software Co., Ltd., Beijing 100085 (CN)
(72) Inventor: QIAO, Xuemei, Beijing 100085 (CN)
(74) Representative: dompatent von Kreisler Selting Werner - Partnerschaft von Patent- und Rechtsanwälten mbB
(86) International application number: PCT/CN2021/072224
(87) International publication number: WO 2022/151376

(57) **Abstract**

An indication method for blind retransmission of a random access message, comprising: sending first indication information to a terminal, the first indication information being used for indicating the configuration for blindly retransmitting a random access message (S 101). A base station may, by means of first indication information, indicate to a terminal the configuration for blindly retransmitting a random access message, so that the terminal may, according to the configuration, blindly retransmit the random access message to the base station or receive the random access message blindly retransmitted by the base station, thus achieving enhanced coverage of a random access message so as to meet the requirements of terminals for enhanced coverage.

## Description

### TECHNICAL FIELD

The disclosure relates to a field of communication technologies, and more particularly to a method for indicating repetition of a random access message, a method for repetition of a random access message, an apparatus for indicating repetition of a random access message, and an apparatus for repetition of a random access message.

### BACKGROUND

In order to cover requirements of midrange Internet of Things devices, a reduced capability (redcap) terminal, also called an NR-lite terminal, is proposed. The reduced capability terminal has requirements of low cost, low complexity, power saving, a power coverage with a certain degree, and the like. In addition, in some cases, there is an insufficient coverage for an uplink transmission of a common terminal, coverage enhancement needs be performed on the uplink transmission.

### SUMMARY

In view of this, embodiments of the disclosure provide a method for indicating repetition of a random access message, relate to a method for repetition of a random access message, an apparatus for indicating repetition of a random access message, an apparatus for repetition of a random access message, an electronic device, a computer readable storage medium, to resolve the technical problem in the related technology.

According to a first aspect of embodiments of the disclosure, there is provided a method for indicating repetition of a random access message, applicable to a base station. The method includes:
sending first indication information to a terminal, in which, the first indication information is configured to indicate a configuration for the repetition of the random access message.

According to a second aspect of embodiments of the disclosure, there is provided a method for repetition of a random access message, applicable to a terminal. The method includes:
receiving first indication information sent by a base station; and
determining a configuration for the repetition of the random access message based on the first indication information.

According to a third aspect of embodiments of the disclosure, there is provided an apparatus for indicating repetition of a random access message, applicable to a base station. The apparatus includes:
a first indicating module, configured to send first indication information to a terminal, in which, the first indication information is configured to indicate a configuration for the repetition of the random access message.

According to a fourth aspect of embodiments of the disclosure, there is provided an apparatus for repetition of a random access message, applicable to a terminal. The apparatus includes:
a first indication receiving module, configured to receive first indication information sent by a base station; and
a first configuration determining module, configured to determine a configuration for the repetition of the random access message based on the first indication information.

According to a fifth aspect of embodiments of the disclosure, there is provided an electronic device, including:
a processor; and
a memory, configured to store instructions executable by the processor.

The processor is configured to perform the method for indicating repetition of a random access message or the method for repetition of a random access message above.

According to a sixth aspect of embodiments of the disclosure, there is provided a computer readable storage medium. A computer program is stored on the computer readable storage medium. When the computer program is executed by a processor, steps of the method for indicating repetition of a random access message and/or steps of the method for repetition of a random access message above are implemented.

According to embodiments of the disclosure, the base station can indicate the terminal the configuration for the repetition of the random access message through the first indication information, such that the terminal can perform repetition on the random access message to the base station or receive the random access message on which the base station performs repetition based on the configuration, thus an enhanced coverage on the random access message may be realized, to meet the requirement of the terminal for the enhanced coverage.

### BRIEF DESCRIPTION OF THE DRAWINGS

In order to illustrate technical solutions in embodiments of the disclosure more clearly, a brief description of accompanying drawings used in embodiments is given below. Obviously, the accompanying drawings in the following descriptions are only part embodiments of the disclosure, and for those skilled in the art, other accompanying drawings can be obtained according to these accompanying drawings without creative labor.
FIG. 1 is a flowchart illustrating a method for indicating repetition of a random access message according to embodiments of the disclosure.
FIG. 2 is a flowchart illustrating another method for indicating repetition of a random access message according to embodiments of the disclosure.
FIG. 3 is a flowchart illustrating yet another method for indicating repetition of a random access message according to embodiments of the disclosure.
FIGs. 4A and 4B are schematic diagrams illustrating a reserved field in an RAR according to embodiments of the disclosure.
FIG. 5 is a flowchart illustrating a method for repetition of a random access message according to embodiments of the disclosure.
FIG. 6 is a flowchart illustrating another method for repetition of a random access message according to embodiments of the disclosure.
FIG. 7 is a flowchart illustrating yet another method for repetition of a random access message according to embodiments of the disclosure.
FIG. 8 is a flowchart illustrating yet another method for repetition of a random access message according to embodiments of the disclosure.
FIG. 9 is a flowchart illustrating yet another method for repetition of a random access message according to embodiments of the disclosure.
FIG. 10 is a flowchart illustrating yet another method for repetition of a random access message according to embodiments of the disclosure.
FIG. 11 is a flowchart illustrating yet another method for repetition of a random access message according to embodiments of the disclosure.
FIG. 12 is a block diagram illustrating an apparatus for indicating repetition of a random access message according to embodiments of the disclosure.
FIG. 13 is a block diagram illustrating another apparatus for indicating repetition of a random access message according to embodiments of the disclosure.
FIG. 14 is a block diagram illustrating yet another apparatus for indicating repetition of a random access message according to embodiments of the disclosure.
FIG. 15 is a block diagram illustrating an apparatus for repetition of a random access message according to embodiments of the disclosure.
FIG. 16 is a block diagram illustrating another apparatus for repetition of a random access message according to embodiments of the disclosure.
FIG. 17 is a block diagram illustrating yet another apparatus for repetition of a random access message according to embodiments of the disclosure.
FIG. 18 is a block diagram illustrating yet another apparatus for repetition of a random access message according to embodiments of the disclosure.
FIG. 19 is a block diagram illustrating yet another apparatus for repetition of a random access message according to embodiments of the disclosure.
FIG. 20 is a block diagram illustrating yet another apparatus for repetition of a random access message according to embodiments of the disclosure.
FIG. 21 is a block diagram illustrating a device for indicating repetition of a random access message according to embodiments of the disclosure.
FIG. 22 is a block diagram illustrating a device for repetition of a random access message according to embodiments of the disclosure.

### DETAILED DESCRIPTION

Description will be made clearly and completely below to the technical solution in embodiments of the disclosure with reference to accompanying drawings in embodiments of the disclosure. Obviously, the accompanying drawings in the following descriptions are only a part of embodiments of the disclosure, but not all the embodiments. Based on the embodiments in the disclosure, all other embodiments obtained by the skilled in the art without creative labor belong to the protection scope of the disclosure.

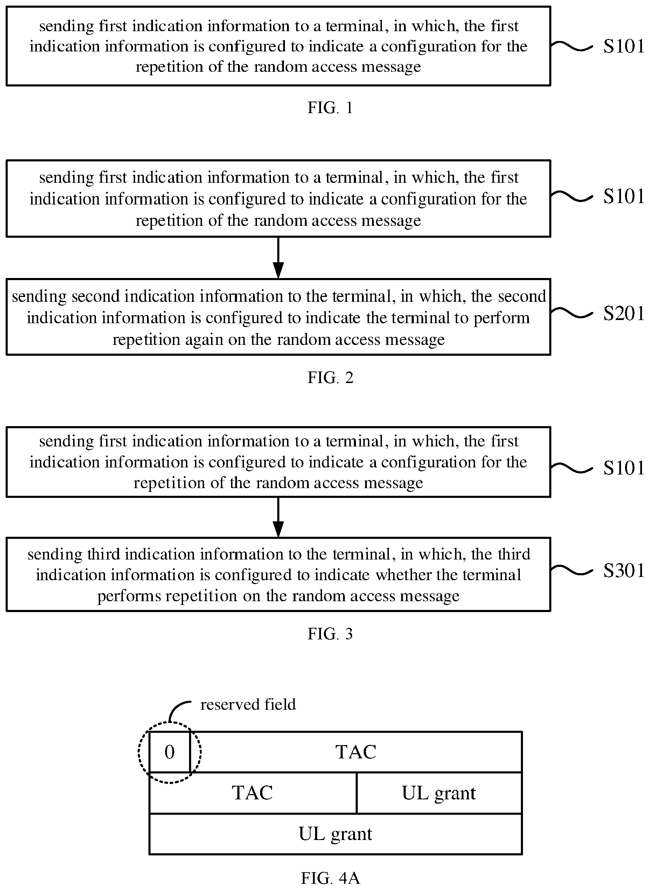

FIG. 1 is a flow chart illustrating a method for indicating repetition of a random access message according to embodiments of the disclosure. The method for indicating repetition of the random access message illustrated in the embodiments may be applicable to a base station. The base station includes, but is not limited to, a 4G base station, a 5G base station, and a 6G base station. The base station may communicate with a terminal as a user equipment. The terminal includes, but is not limited to, an electronic device such as a mobile phone, a tablet, a wearable device, a sensor, or an Internet of Things device.

In an embodiment, the terminal may be a terminal to which a method for repetition of a random access message according to any one of following embodiments is applicable.

In an embodiment, the terminal may be a reduced capacity terminal, i.e., a redcap terminal, or a common terminal such as a common terminal located at the edge of a cell.

As illustrated in FIG. 1, the method for indicating repetition on the random access message may include following actions.

At block S101, first indication information is sent to a terminal. The first indication information is configured to indicate a configuration for the repetition of the random access message.

In an embodiment, the random access message includes, but is not limited to, a third message in random access Msg3, a second message in random access Msg2, and a fourth message in random access Msg4.

For the Msg3, the terminal sends the Msg3 to the base station, and the configuration indicated by the first indication information is an uplink configuration for the terminal to perform repetition on the Msg3 to the base station. For the Msg2, the base station sends the Msg2 to the terminal, and the configuration indicated by the first indication information is a downlink configuration for the terminal to receive the Msg2 on which the base station performs repetition. Similarly, for the Msg4, the configuration indicated by the first indication information is a downlink configuration for the terminal to receive the Msg4 on which the base station performs repetition.

The following embodiments take the repetition of the Msg3 as an example for describing the technical solution of the disclosure.

In an embodiment, the configuration indicated by the first indication information includes, but is not limited to, the number of times of repetitions and occupied resources. The resources may include time domain resources and frequency domain resources. Taking the time domain resource as an example, the first indication information may indicate information such as a time slot, a start symbol and a symbol length of the repetition of the random access message.

According to embodiments, the base station can indicate the configuration for the terminal to perform repetition on the random access message by the first indication information, such that the terminal can perform repetition on the random access message to the base station or receive the random access message on which the base station performs repetition based on the configuration, thus implementing an enhanced coverage on the random access message, and meeting the requirement of the terminal for the enhanced coverage.

In addition, for different terminals, different configurations for the repetition of the random access message may be indicated by the first indication information. For example, the terminal may send auxiliary information to the base station to inform the base station of the requirement of the terminal for the enhanced coverage. For example, the auxiliary information includes, but is not limited to, an initial access bandwidth for communication between the terminal and the base station, a size of an antenna in the terminal, etc., and then the configuration for the repetition of the random access message may be determined based on the auxiliary information.

Taking that the configuration includes the number of times of repetition as an example, a relatively large number of times may be indicated in a case that there is a relatively small initial access bandwidth (lower than a preset bandwidth) and/or a relatively small size (lower than a preset size) of the antenna in the terminal; a relatively small number of times may be indicated in a case that there is a relatively large initial access bandwidth (greater than the preset bandwidth) and/or a relatively large size (greater than the preset size) of the antenna in the terminal.

Thus, while the requirement of the terminal for the enhanced coverage is met, different configurations may be indicated for the terminal in a targeted manner due to different degrees of coverage enhancement required by different terminals, which is beneficial to avoiding the terminal from performing repetition for too many times, thereby avoiding the waste of resources.

In an embodiment, the first indication information is located in a newly added field or multiplexed in an existing field.

For example, the random access message in the repetition is the Msg3, and the first indication information may be carried in a random access response (RAR, i.e., the Msg2).

One or more bits may be added into the RAR. For example, the RAR may be extended from 27 bits to 29 bits, and the bits added newly may be configured as the newly added field for carrying the first indication information.

A transmission power control (TPC) field in the RAR may also be multiplexed to carry the first indication information. For example, one or more bits in the TPC field may be multiplexed to carry the first indication information.

In an embodiment, the first indication information is index information or number information.

For example, the first indication information may be the number information. For example, in a case that the first indication information occupies 5 bits, the first indication information may indicate at most 32 times.

For example, the first indication information may be the index information. The terminal may determine a configuration corresponding to the index information in a list based on the index information. The list includes, but is not limited to, a time domain resource allocation list (TDRA list) or a default table A.

In an embodiment, the index information is configured to indicate the configuration for the repetition of the random access message in the list.

The list is a newly added list or an existing list. Information representing the configuration for the repetition of the random access message is newly added in the existing list.

In an embodiment, the terminal may determine the configuration corresponding to the index information in the list based on the index information.

In an embodiment, the list may be the newly added list. For example, the newly added list includes 4 numbers of times of repetitions, which are respectively 2, 4, 8 and 16, and then the index information may be 0 to 3, with index information 0 indicating that the number of times is 2 in the newly added list, index information 1 indicating that the number of times is 4 in the newly added list, index information 2 indicating that the number of times is 8 in the newly added list, and index information 3 indicating that the number of times is 16 in the newly added list.

In an embodiment, the index information is located in a newly added field related to the newly added list in the Msg2 or in the transmission power control field of the Msg2. The above four pieces of index information may be indicated by two bits. For example, the two bits are two bits newly added in the RAR, and the two bits may also be located in the transmission power control field of the Msg2.

For example, taking that the two bits may also be located in the transmission power control field of the Msg2 as an example, the TPC field in the RAR may be multiplexed, and then a length corresponding to fields in the RAR may be as illustrated in Table 1:

**Table 1**

| RAR grant domain | Length |
|---|---|
| Freq.hopping flag | 1 |
| FDRA | 14 |
| TDRA | 4 |
| MCS | 4 |
| repetition number index | 2 |
| CSI requesst | 1 |
| R | 1 |

The repetition number index multiplexes two bits in the TPC field, which may be taken as the above index information to indicate the four situations of 0 to 3.

In an embodiment, the list is the existing list, such as the time domain resource allocation list, or the default table A, then the information representing the configuration for the repetition of the random access message may be newly added into the existing list.

In an embodiment, in a case that the list is the existing list, the index information may be located in a target field related to the existing list in the Msg2.

Taking that the existing list is the time domain resource allocation list as an example, the time domain resource allocation list has 16 rows and 5 columns. The first column is index numbers, the second column is mapping types of a physical uplink shared channel (PUSCH), the third column is K₂ values, the fourth column is S values, and the fifth column is L values.

Then, in the time domain resource allocation list, a sixth column may be further added to represent the number of times of repetitions of the random access message. In addition to extending the number of columns in the time domain resource allocation list, the number of rows in the time domain resource allocation list may also be extended. For example, the 16 rows are extended to 64 rows, thus indicating 64 configurations for the repetitions of the random access message.

In an embodiment, the index information may be located in the TDRA field of the Msg2, and the TDRA field is the target field. Further, the index information is also located in the newly added field of the target field or in the transmission power control field of the Msg2. For example, when the TDRA field needs to be extended, a new field may be added in the TDRA field, then the index information is located in the TDAR field and the newly added field of the TDRA field, or the TPC field may be multiplexed as an extended field of the TDRA field, then the index information is located in the TDRA field and the transmission power control field multiplexed.

In an embodiment, the TDRA field occupies 4 bits. In order to extend the TDRA field to indicate 64 rows, 2 bits of the TPC field in the RAR may be multiplexed. Then the corresponding length of the fields in the RAR may be illustrated in Table 2:

**Table 2**

| RAR grant domain | Length |
|---|---|
| Freq.hopping flag | 1 |
| FDRA | 14 |
| TDRA | 6 |
| MCS | 4 |
| CSI requesst | 1 |
| R | 1 |

An original TDRA field occupies 4 bits. The extended TDRA field occupies 6 bits, of which 4 bits are bits of the original TDRA field, and the extended 2 bits multiplexes 2 bits in the TPC field.

In an embodiment, the list is pre-agreed (such as, a protocol agreement) or indicated to the terminal by system information.

In an embodiment, the system information may be configured to indicate two lists, or to pre-agree two lists.

One list is a list including the index information above, that is, including the information representing the configuration for the repetition of the random access message, which for example is called as a list X. The terminal may determine the configuration for the repetition of the random access message based on the list X.

Another list does not include the information representing the configuration for the repetition of the random access message, which for example is called as a list Y Based on the list Y, the terminal may only determine a configuration for transmitting the random access message, but may not determine the information representing the configuration for the repetition of the random access message.

In a case that the terminal needs to perform repetition on the random access message, the terminal may query a configuration in the list X based on the index information after receiving the index information sent by the base station, and perform repetition on the random access message based on the configuration queried. In a case that the terminal does not need to perform repetition on the random access message, the terminal may query a configuration in the list Y based on the index information after receiving the index information sent by the base station, and transmit the random access message once based on the configuration queried.

In an embodiment, the time domain resource allocation list may be indicated to the terminal by the system information (e.g., a system information block SIB 1), and the default table A may be pre-agreed.

In an embodiment, in a case that the existing list is extended, for example, a field representing the configuration for the repetition of the random access message is newly added to the existing list, the repetition may be performed on the random access message based on a configuration in the extended list. However, in some cases, the terminal may not perform repetition on the random access message, but only need to transmit the random access message once.

In this case, for example, the TDRA field is extended by multiplexing the TPC field, the TPC field may be interpreted based on a meaning before the TPC field is multiplexed, which is equivalent to a condition where the TDAR field is not extended for the terminal. For example, in a case that the TDRA field is directly extended, the extended bit may be filled with 0 (for example, the extended bit is located at the front of the original TDRA field), which is equivalent to not extending the TDRA field for the terminal, and the newly added information about the number of times of repetitions in the TDRA list may be regarded as invalid.

In an embodiment, in a case that the list is newly added, the repetition may be performed on the random access message based on a configuration in the newly added list. However, in some cases, the terminal may not perform repetition on the random access message, but only need to transmit the random access message once.

In this case, for example, the index information obtained by multiplexing the TPC field is configured to indicate the number of times of repetitions in the newly added list, the TPC field may be interpreted based on a meaning before multiplexing the TPC field, which is equivalent to that the TPC field does not indicate the number of times of repetitions for the terminal. For example, the RAR field is directly extended, then the extended bit may be deleted or filled with 0 (for example, the extended bit is located at the front of the original TDRA field), which is equivalent to not extending the RAR field for the terminal, and does not indicate the number of times of repetitions.

FIG. 2 is a flowchart illustrating another method for indicating repetition of a random access message according to embodiments of the disclosure. As illustrated in FIG. 2, in some embodiments of the disclosure, the method also includes:
at block S201, sending second indication information to the terminal. The second indication information is configured to indicate the terminal to perform repetition again on the random access message.

In an embodiment, the base station may also indicate the terminal whether to perform repetition again on the random access message by sending the second indication information to the terminal. The second indication information may be, such as, a hybrid automatic repeat request (HARQ).

It should be noted that, the repetition of the random access message means that the terminal automatically transmits the random access message to the base station for multiple times based on the configuration, or the terminal automatically receives the random access message transmitted by the terminal for multiple times based on the configuration. This concept is different from retransmission. The retransmission refers to operation that the terminal receives an indication from the base station, such as the hybrid automatic repeat request (HARQ) of the base station, and determines that the base station does not receive content transmitted for the first time, and then retransmits the content.

In an embodiment, the terminal may perform repetition again on the random access message based on a configuration for performing a first repetition on the random access message, or based on a configuration for the repetition performed again on the random access message indicated in the second indication information from the base station. For example, the second indication information also carries index information, and then the terminal may query the configuration in the above list based on the index information, to perform repetition again on the random access message.

In an embodiment, the second indication information may be downlink control information (DCI), particularly to a DCI format 0_0. The DCI may be scrambled by TC-RNTI (radio network temporary identifier).

In a case that the list is the newly added list, the index information in the second indication information may multiplex a TPC field in the DCI, or a new field may be added in the DCI to carry the index information in the second indication information.

In a case that the list is the existing list, the TPC field in the DCI may be multiplexed, and the TPC field multiplexed is taken as an extended field of a TDRA field in the DCI. Alternatively, the TDRA field may be directly extended, then the index information in the second indication information is carried in the TDRA field in the DCI and an extended field of the TDRA.

FIG. 3 is a flowchart illustrating yet another method for indicating repetition of a random access message according to embodiments of the disclosure. As illustrated in FIG. 3, in some embodiments, the method also includes:
at block S301, sending third indication information to the terminal. The third indication information is configured to indicate the terminal whether to perform repetition on the random access message.

In an embodiment, the terminal may also indicate the terminal whether to perform repetition on the random access message by sending the third indication information to the terminal. For example, the third indication information may be carried in a reserved field in the RAR.

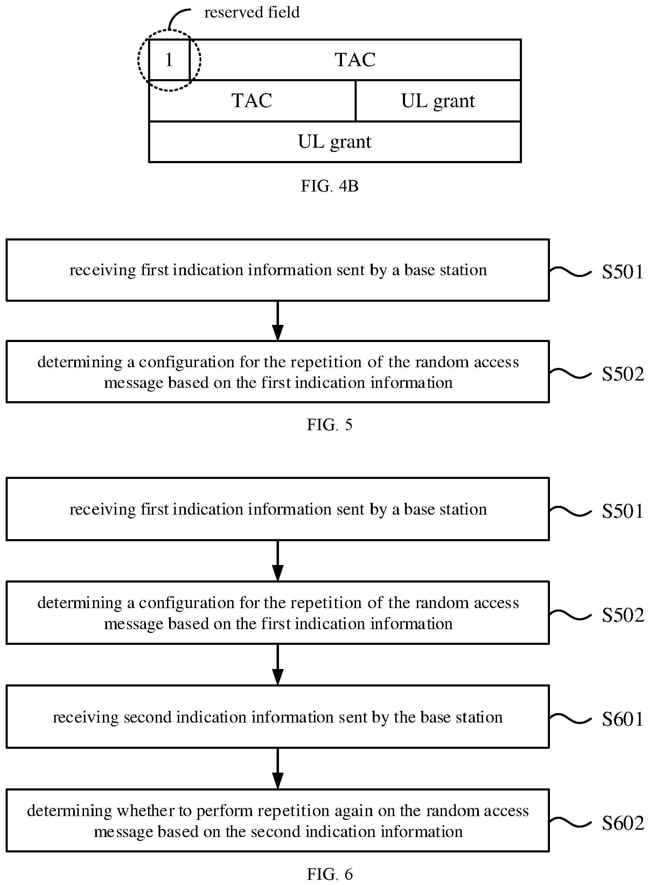

FIGS. 4A and 4B are schematic diagrams illustrating a reserved field in an RAR according to embodiments of the disclosure.

As illustrated in FIG. 4A, for example, when the reserved field is 0, the terminal may be indicated not to perform repetition on the random access message, and then the terminal (in a random access procedure) may send the random access message once. As illustrated in FIG. 4B, for example, when the reserved field is 1, the terminal may be indicated to perform repetition on the random access message, and then the terminal (in the random access procedure) may perform repetition on the random access message based on the configuration for the repetition.

In an embodiment, in a case that the terminal determines that the repetition needs to be performed on the random access message, a full power or fixed power (which may be configured by the base station or agreed by the protocol) may be used for the repetition.

FIG. 5 is a flowchart illustrating a method for repetition of a random access message according to embodiments of the disclosure. The method for repetition of the random access message illustrated in embodiments may be applicable to a terminal. The terminal includes, but is not limited to, an electronic device such as a mobile phone, a tablet, a wearable device, a sensor, or an Internet of Things device. The terminal may be as a user equipment to communicate with a base station. The base station includes, but is not limited to, a 4G base station, a 5G base station, and a 6G base station.

In an embodiment, the base station may be a base station to which the method for indicating repetition of a random access message according to any one of the above embodiments is applicable.

As illustrated in FIG. 5, the method for repetition of the random access message may include following actions.

At block S501, first indication information sent by a base station is received.

At block S502, a configuration for the repetition of the random access message is determined based on the first indication information.

In an embodiment, the random access message includes, but is not limited to, a third message in random access Msg3, a second message in random access Msg2, and a fourth message in random access Msg4.

For the Msg3, the terminal sends the Msg3 to the base station, and the configuration indicated by the first indication information is an uplink configuration for the terminal to perform repetition on the Msg3 to the base station. For the Msg2, the base station sends the Msg2 to the terminal, and the configuration indicated by the first indication information is a downlink configuration for the terminal to receive the Msg2 on which the base station performs repetition. Similarly, for the Msg4, the configuration indicated by the first indication information is a downlink configuration for the terminal to receive the Msg4 on which the base station performs repetition.

The following embodiments takes the repetition of the Msg3 as an example for describing the technical solution of the disclosure.

In an embodiment, the configuration indicated by the first indication information includes, but is not limited to, the number of times of repetitions and occupied resources (such as, time domain resources, frequency domain resources).

According to embodiments, the base station can indicate the configuration for the terminal to perform repetition on the random access message by the first indication information, such that the terminal can performs repetition on the random access message to the base station or receive the random access message on which the base station performs repetition based on the configuration, thus implementing an enhanced coverage on the random access message, and meeting the requirement of the terminal for the enhanced coverage.

In an embodiment, the first indication information is located in a newly added field or multiplexed in an existing field.

For example, the random access message in the repetition is the Msg3, and the first indication information may be carried in a random access response (RAR, i.e., the Msg2).

One or more bits may be added to the RAR. For example, the RAR may be extended from 27 bits to 29 bits, and the bits added newly may be configured as the newly added field for carrying the first indication information.

A transmission power control (TPC) field in the RAR may also be multiplexed to carry the first indication information. For example, one or more bits in the TPC field may be multiplexed to carry the first indication information.

In an embodiment, the first indication information is index information or number information.

For example, the first indication information may be the number information. For example, in a case that the first indication information occupies 5 bits, the first indication information may indicate at most 32 times.

For example, the first indication information may be the index information. The terminal may determine a configuration corresponding to the index information in a list based on the index information. The list includes, but is not limited to, a time domain resource allocation list (TDRA list) or a default table A.

In an embodiment, the index information is configured to indicate the configuration for the repetition of the random access message in the list.

The list is a newly added list or an existing list. Information representing the configuration for the repetition of the random access message is newly added in the existing list.

In an embodiment, the terminal may determine the configuration corresponding to the index information in the list based on the index information.

In an embodiment, the list may be the newly added list. For example, the newly added list includes 4 numbers of times of repetitions, which are respectively 2, 4, 8 and 16, and then the index information may be 0 to 3, with index information 0 indicating that the number of times is 2 in the newly added list, index information 1 indicating that the number of times is 4 in the newly added list, index information 2 indicating that the number of times is 8 in the newly added list, and index information 3 indicating that the number of times is 16 in the newly added list.

In an embodiment, the index information is located in a newly added field related to the newly added list in the Msg2 or in the transmission power control field of the Msg2. The above four pieces of index information may be indicated by two bits. For example, the two bits are newly added in the RAR, and the two bits may also be located in the transmission power control field of the Msg2.

For example, taking that the two bits may also be located in the transmission power control field of the Msg2 as an example, the TPC field in the RAR may be multiplexed, and then a length corresponding to fields in the RAR may be as illustrated in Table 1 above.

The repetition number index multiplexes two bits in the TPC field, which may be taken as the above index information to indicate the four situations of 0 to 3.

In an embodiment, the list is the existing list, such as the time domain resource allocation list, or the default table A, then the information representing the configuration for the repetition of the random access message may be newly added to the existing list.

In an embodiment, in a case that the list is the existing list, the index information may be located in a target field related to the existing list in the Msg2.

Taking that the existing list is the time domain resource allocation list as an example, the time domain resource allocation list has 16 rows and 5 columns. The first column is index numbers, the second column is mapping types of a physical uplink shared channel (PUSCH), the third column is K₂ values, the fourth column is S values, and the fifth column is L values.

Then, in the time domain resource allocation list, a sixth column may be further added to represent the number of times of repetitions on the random access message. In addition to extending the number of columns in the time domain resource allocation list, the number of rows in the time domain resource allocation list may also be extended. For example, the 16 rows are extended to 64 rows, thus indicating 64 configurations for the repetitions on the random access message.

In an embodiment, the index information may be located in the TDRA field of the Msg2, and the TDRA field is the target field. Further, the index information is also located in the newly added field of the target field or in the transmission power control field of the Msg2. For example, when the TDRA field needs to be extended, a new field may be added in the TDRA field, then the index information is located in the TDAR field and the newly added field of the TDRA field, or the TPC field may be multiplexed as an extended field of the TDRA field, then the index information is located in the TDRA field and the transmission power control field multiplexed.

In an embodiment, the TDRA field occupies 4 bits. In order to extend the TDRA field to indicate the 64 rows, 2 bits of the TPC field in the RAR may be multiplexed. Then the length corresponding to the fields in the RAR may be illustrated in Table 2 above.

An original TDRA field occupies 4 bits. The extended TDRA field occupies 6 bits, of which 4 bits are bits of the original TDRA field, and the extended 2 bits multiplexes 2 bits in the TPC field.

In an embodiment, the list is pre-agreed or indicated to the terminal by system information.

In an embodiment, the time domain resource allocation list may be indicated to the terminal by the system information (e.g., a system information block SIB 1), and the default table A may be pre-agreed.

In an embodiment, in a case that the existing list is extended, for example, a field representing the configuration for the repetition of the random access message is newly added to the existing list, the repetition may be performed on the random access message based on a configuration in the extended list. However, in some cases, the terminal may not perform repetition on the random access message, but only need to transmit the random access message once.

In this case, for example, the TDRA field is extended by multiplexing the TPC field, the TPC field may be interpreted based on a meaning before the TPC field is multiplexed, which is equivalent to a condition where the TDAR field is not extended for the terminal. For example, in a case that the TDRA field is directly extended, the extended bit may be filled with 0 (for example, the extended bit is located at the front of the original TDRA field), which is equivalent to not extending the TDRA field for the terminal, and the newly added information about the number of times of repetitions in the TDRA list may be regarded as invalid.

In an embodiment, in a case that the list is newly added, the repetition may be performed on the random access message based on a configuration in the newly added list. However, in some cases, the terminal may not perform repetition on the random access message, but only need to transmit the random access message once.

In this case, for example, the index information obtained by multiplexing the TPC field is configured to indicate the number of times of repetitions in the newly added list, the TPC field may be interpreted based on a meaning before multiplexing the TPC field, which is equivalent to that the TPC field does not indicate the number of times of repetitions for the terminal. For example, the RAR field is directly extended, then the extended bit may be deleted or filled with 0 (for example, the extended bit is located at the front of the original TDRA field), which is equivalent to not extending the RAR field for the terminal, and does not indicate the number of times of repetitions.

FIG. 6 is a flowchart illustrating another method for repetition of a random access message according to embodiments of the disclosure. As illustrated in FIG. 6, in some embodiments of the disclosure, the method also includes:
at block S601, receiving second indication information sent by the base station; and
at block S602, determining whether to perform repetition again on the random access message based on the second indication information.

In an embodiment, the base station may also indicate the terminal whether to perform repetition again on the random access message by sending the second indication information to the terminal. The second indication information may be, such as, a hybrid automatic repeat request (HARQ).

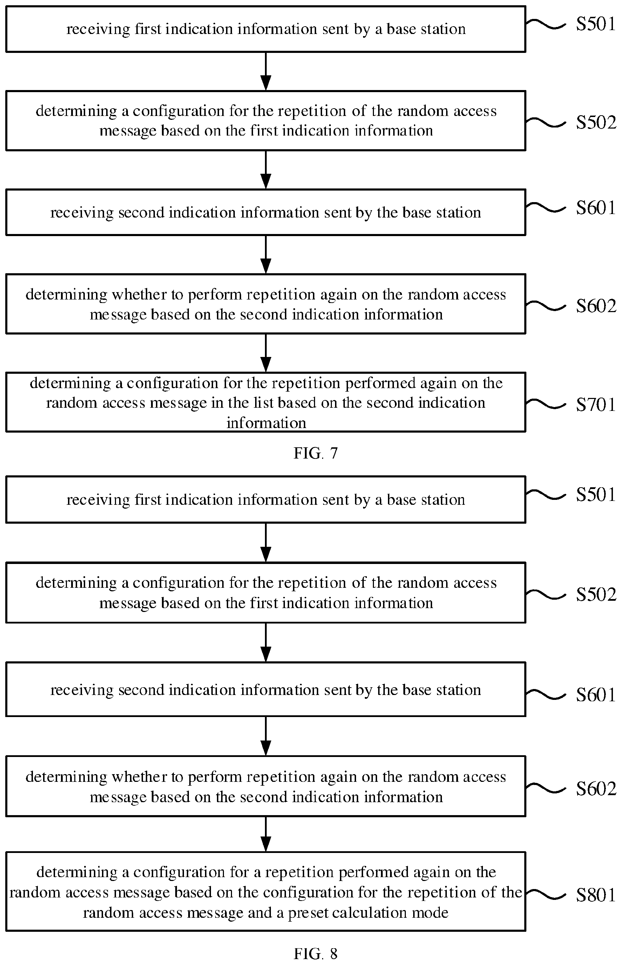

FIG. 7 is a flowchart illustrating yet another method for repetition of a random access message according to embodiments of the disclosure. As illustrated in FIG. 7, in some embodiments, the method also includes:
at block S701, determining a configuration for the repetition performed again on the random access message in the list based on the second indication information.

In an embodiment, the terminal may perform repetition again on the random access message based on a configuration for performing a first repetition on the random access message, or perform repetition again on the random access message based on the configuration for indicating the repetition performed again on the random access message in the second indication information. For example, the second indication information also carries index information, and then the terminal may query the configuration in the above list based on the index information, to perform repetition again on the random access message.

In an embodiment, the second indication information may be downlink control information (DCI), particularly to a DCI format 0_0. The DCI may be scrambled by TC-RNTI (radio network temporary identifier).

In a case that the list is the newly added list, the index information in the second indication information may multiplex a TPC field in the DCI, or a new field may be added in the DCI to carry the index information in the second indication information.

In a case that the list is the existing list, the TPC field in the DCI may be multiplexed, and the TPC field multiplexed is taken as an extended field of a TDRA field in the DCI. Alternatively, the TDRA field may be directly extended, then the index information in the second indication information is carried in the TDRA field in the DCI and an extended field of the TDRA.

FIG. 8 is a flowchart illustrating yet another method for repetition of a random access message according to embodiments of the disclosure. As illustrated in FIG. 8, in some embodiments, the method also includes:
at block S801, determining a configuration for a repetition performed again on the random access message based on the configuration for the repetition of the random access message and a preset calculation mode.

In an embodiment, the terminal may independently determine the configuration for the repetition performed again on the random access message, for example, based on the configuration for the repetition of the random access message and the preset calculation mode. The preset calculation mode may be indicated by the base station (such, by the system information) or agreed by the protocol.

Taking the number of times of repetitions of the random access message when performing the repetition on the random access message as an example, the configuration may be calculated based on the number of times of repetitions of the random access message for the first time. For example, the number of times of repetitions of the random access message for the first time is m, and the preset calculation mode may be m*n, where n is a positive number, such as 1/2, 1/4, 1, 2, 4, etc. Accordingly, the terminal may independently determine the configuration for the repetition performed again on the random access message.

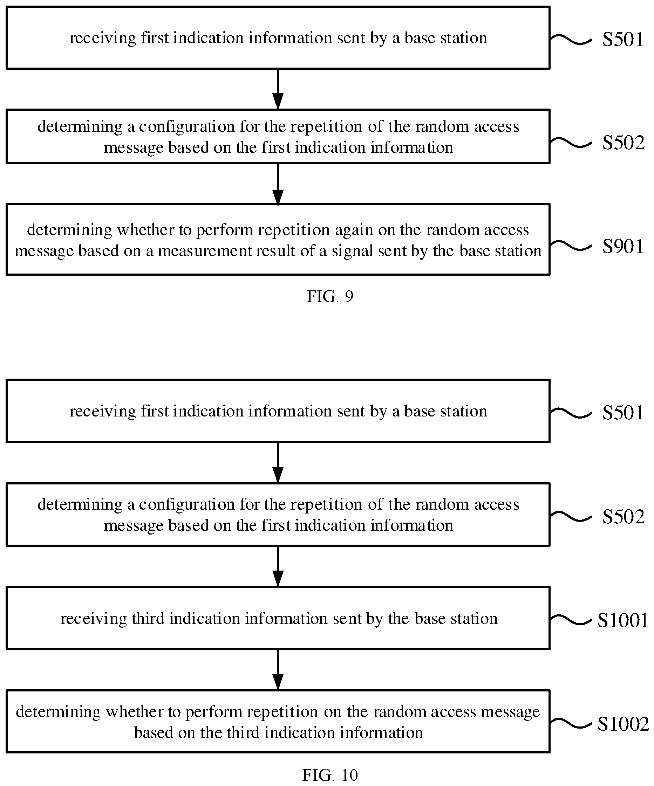

FIG. 9 is a flowchart illustrating yet another method for repetition of a random access message according to embodiments of the disclosure. As illustrated in FIG. 9, in some embodiments, the method also includes:
at block S901, determining whether to perform repetition again on the random access message based on a measurement result of a signal sent by the base station.

In an embodiment, the base station indicates whether the terminal performs the repetition again on the random access message, the terminal may also independently determine whether to perform repetition again on the random access message.

For example, the signal sent by the base station may be measured, such as a signal intensity (which may be characterized by a reference signal receiving power (RSRP)), and then it is determined whether to perform repetition again on the random access message based on the measurement result. For example, in a case that there is a relatively low signal intensity (lower than a preset intensity), the repetition is performed again on the random access message. For example, in a case that there is a relatively high signal strength (greater than a preset intensity), there is no need to perform repetition again on the random access message.

FIG. 10 is a flowchart illustrating yet another method for repetition of a random access message according to embodiments of the disclosure. As illustrated in FIG. 8, in some embodiments, the method also includes:
at block S 1001, receiving third indication information sent by the base station; and
at block S 1002, determining whether to perform repetition on the random access message based on the third indication information.

In an embodiment, the terminal may also indicate the terminal whether to perform repetition on the random access message by sending the third indication information to the terminal. For example, the third indication information may be carried in a reserved field in the RAR.

As illustrated in FIG. 4A, for example, when the reserved field is 0, the terminal may be indicated not to perform repetition on the random access message, and then the terminal (in a random access procedure) may send the random access message once. As illustrated in FIG. 4B, for example, when the reserved field is 1, the terminal may be indicated to perform repetition on the random access message, and then the terminal (in the random access procedure) may perform repetition on the random access message based on the configuration for the repetition.

In an embodiment, in a case that the terminal determines that the repetition needs to be performed on the random access message, a full power or fixed power (which may be configured by the base station or agreed by the protocol) may be used for the repetition.

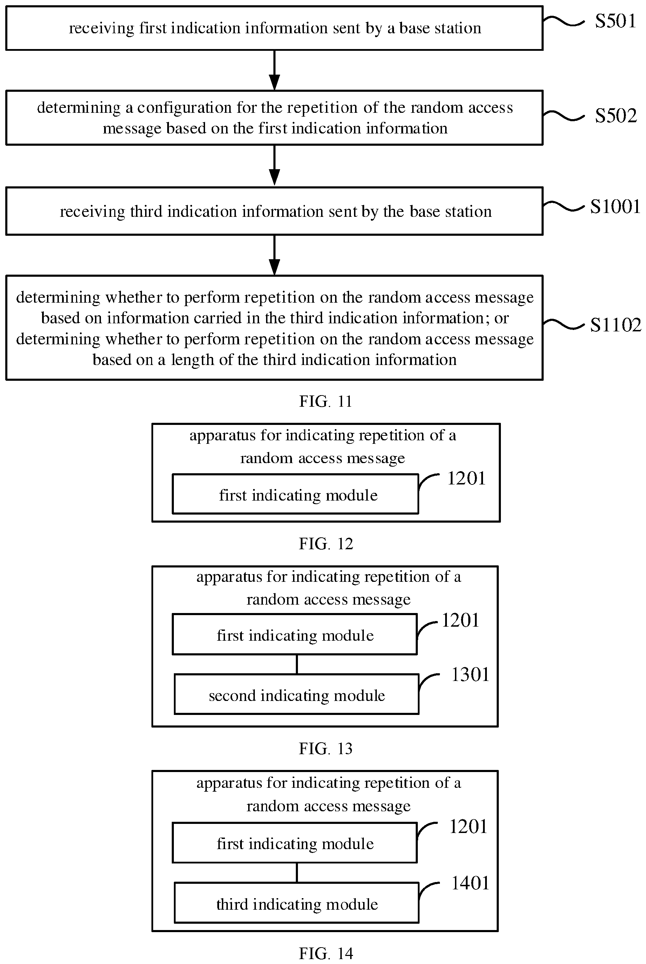

FIG. 11 is a flowchart illustrating yet another method for repetition of a random access message according to embodiments of the disclosure. As illustrated in FIG. 11, in some embodiments, determining whether to perform repetition on the random access message based on the third indication information includes:
at block S1101, determining whether to perform repetition on the random access message based on information carried in the third indication information;
   or
determining whether to perform repetition on the random access message based on a length of the third indication information.

In an embodiment, the third indication information may be configured to explicitly indicate the terminal whether to perform repetition on the random access message, that is, the third indication information carries information for indicating whether the terminal performs the repetition on the random access message.

In an embodiment, the third indication information may be configured to implicitly indicate the terminal whether to perform repetition on the random access message. That is, the information carried in the third indication information is not configured to indicate the terminal whether to perform repetition on the random access message, but it is determined whether the terminal performs the repetition on the random access message based on other features of the third indication information, such as the length of the third indication information.

When determining that the repetition needs to be performed on the random access message, the terminal may perform repetition on the random access message based on the configuration for the repetition in a random access procedure. For example, when the configuration is for 8 times, the repetition may be performed on the random access message for 8 times. When determining not to perform repetition on the random access message, the terminal may send the random access message only once in the random access procedure.

In an embodiment, the base station indicates whether the terminal performs the repetition again on the random access message, the terminal may also independently determine whether to perform repetition again on the random access message.

For example, the terminal may measure the signal sent by the base station, such as measuring a signal intensity (which may be characterized by a reference signal receiving power (RSRP)), and then it is determined whether to perform repetition on the random access message based on the measurement result. For example, in a case that there is a relatively low signal intensity (lower than a preset intensity), the repetition is performed on the random access message. For example, in a case that there is a relatively high signal strength (greater than a preset intensity), there is no need to perform repetition on the random access message.

For example, the terminal may detect an initial access bandwidth for communication with the base station. The repetition may be performed on the random access message in a case that the bandwidth is relatively small (lower than a preset bandwidth), and there is no need to perform repetition on the random access message in a case that the bandwidth is relatively large (greater than a preset bandwidth).

For example, the terminal may determine a size of its own antenna. The repetition may be performed on the random access message in case of a relatively small size (lower than a preset size), and there is no need to perform repetition on the random access message in case of a relatively large size (greater than a preset size).

It should be noted that, the way that the terminal independently determines whether to perform repetition again on the random access message is not limited to the above-mentioned examples, but may be specifically selected and set as needed.

Corresponding to the aforementioned embodiments of the method for indicating repetition on the random access message and the method for repetition of the random access message, the disclosure also provides embodiments of an apparatus for indicating repetition of a random access message and an apparatus for repetition of a random access message.

FIG. 12 is a block diagram illustrating an apparatus for indicating repetition of a random access message according to embodiments of the disclosure. The apparatus for indicating repetition of the random access message illustrated in embodiments may be applicable to a base station. The base station includes, but is not limited to, a 4G base station, a 5G base station, and a 6G base station. The base station may communicate with a terminal as a user equipment. The terminal includes, but is not limited to, an electronic device such as a mobile phone, a tablet, a wearable device, a sensor, or an Internet of Things device.

In an embodiment, the terminal may be a terminal to which an apparatus for repetition of a random access message according to any one of following embodiments is applicable.

In an embodiment, the terminal may be a reduced capacity terminal, i.e., a redcap terminal, or a common terminal such as a common terminal located at the edge of a cell.

As illustrated in FIG. 12, the apparatus for indicating repetition of the random access message may include:
a first indicating module 1201, configured to send first indication information to a terminal. The first indication information is configured to indicate a configuration for the repetition of the random access message.

In an embodiment, the first indication information is located in a newly added field or multiplexed in an existing field.

In an embodiment, the first indication information is index information or number information.

In an embodiment, the index information is configured to indicate the configuration for the repetition of the random access message in a list.

The list is a newly added list or an existing list, and information representing the configuration for the repetition of the random access message is newly added in the existing list.

In an embodiment, the list is pre-agreed or indicated to the terminal by system information.

In an embodiment, the existing list is a time domain resource allocation list or a default table A.

In an embodiment, the random access message is a third message in random access Msg3, a second message in random access Msg2, and a fourth message in random access Msg4.

In an embodiment, the list is the existing list, and the index information is located in a target field related to the existing list in the Msg2.

In an embodiment, the index information is also located in a newly added field of the target field, or in a transmission power control field of the Msg2.

In an embodiment, the list is the newly added list, and the index information is located in a newly added field related to the newly added list in the Msg2, or in a transmission power control field of the Msg2.

FIG. 13 is a block diagram illustrating another apparatus for indicating repetition of a random access message according to embodiments of the disclosure. As illustrated in FIG. 13, in some embodiments, the apparatus also includes:
a second indicating module 1301, configured to send second indication information to the terminal. The second indication information is configured to indicate the terminal to perform repetition again on the random access message.

In an embodiment, the second indication information is also configured to indicate a configuration for the repetition performed again on the random access message in the list.

FIG. 14 is a block diagram illustrating yet another apparatus for indicating repetition of a random access message according to embodiments of the disclosure. As illustrated in FIG. 14, in some embodiments, the apparatus also includes:
a third indicating module 1401, configured to send third indication information to the terminal. The third indication information is configured to indicate the terminal whether to perform repetition on the random access message.

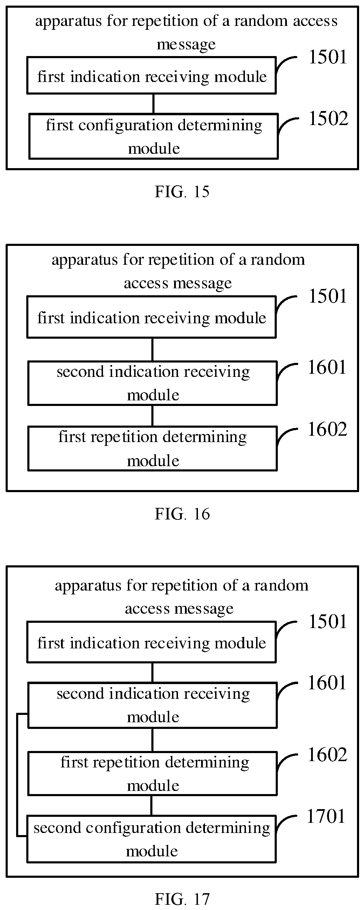

FIG. 15 is a block diagram illustrating an apparatus for repetition of a random access message according to embodiments of the disclosure. The apparatus for repetition of the random access message illustrated in embodiments may be applicable to a terminal. The terminal includes, but is not limited to, an electronic device such as a mobile phone, a tablet, a wearable device, a sensor, or an Internet of Things device. The terminal may be as a user equipment to communicate with a base station. The base station includes, but is not limited to, a 4G base station, a 5G base station, and a 6G base station.

In an embodiment, the base station may be a base station to which the apparatus for indicating repetition of the random access message according to any one of the above embodiments is applicable.

As illustrated in FIG. 15, the apparatus for repetition on the random access message may include:
a first indication receiving module 1501, configured to receive first indication information sent by a base station; and
a first configuration determining module 1502, configured to determine a configuration for the repetition of the random access message based on the first indication information.

In an embodiment, the first indication information is located in a newly added field or multiplexed in an existing field.

In an embodiment, the first indication information is index information or frequency information.

In an embodiment, the index information is configured to indicate the configuration for the repetition of the random access message in a list.

The list is a newly added list or an existing list, and information representing the configuration for the repetition of the random access message is newly added in the existing list.

In an embodiment, the list is pre-agreed or determined based on system information.

In an embodiment, the existing list is a time-domain resource allocation list or a preset table A.

In an embodiment, the random access message is a third message in random access Msg3, and the index information is located in a second message in random access Msg2.

In an embodiment, the list is the existing list, and the index information is located in a target field related to the existing list in the Msg2.

In an embodiment, the index information is also located in a newly added field of the target field, or in a transmission power control field of the Msg2.

In an embodiment, the list is the newly added list, and the index information is located in a newly added field related to the newly added list in the Msg2, or in a transmission power control field of the Msg2.

FIG. 16 is a block diagram illustrating another apparatus for repetition of a random access message according to embodiments of the disclosure. As illustrated in FIG. 16, in some embodiment, the apparatus may also include:
a second indication receiving module 1601, configured to receive second indication information sent by the base station; and
a first repetition determining module 1602, configured to determine whether to perform repetition again on the random access message based on the second indication information.

FIG. 17 is a block diagram illustrating yet another apparatus for repetition of a random access message according to embodiments of the disclosure. As illustrated in FIG. 17, in some embodiment, the apparatus may also include:
a second configuration determining module 1701, configured to determine a configuration for the repetition performed again on the random access message in the list based on the second indication information.

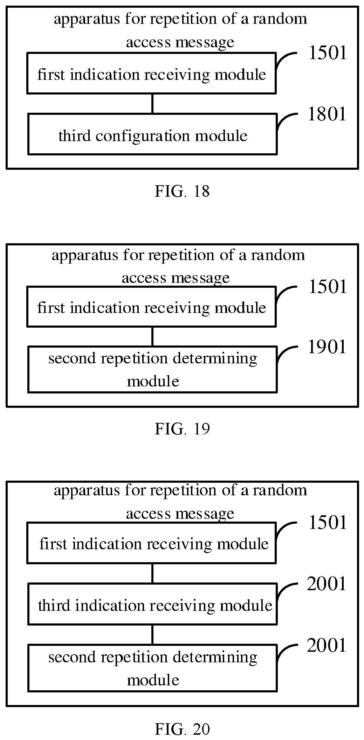

FIG. 18 is a block diagram illustrating yet another apparatus for repetition of a random access message according to embodiments of the disclosure. As illustrated in FIG. 18, in some embodiment, the apparatus may also include:
a third configuration module 1801, configured to determine a configuration for a repetition performed again on the random access message based on the configuration for the repetition of the random access message and a preset calculation mode.

FIG. 19 is a block diagram illustrating yet another apparatus for repetition of a random access message according to embodiments of the disclosure. As illustrated in FIG. 19, in some embodiment, the apparatus may also include:
a second repetition determining module 1901, configured to determine whether to perform repetition again on the random access message based on a measurement result of a signal sent by the base station.

FIG. 20 is a block diagram illustrating yet another apparatus for repetition of a random access message according to embodiments of the disclosure. As illustrated in FIG. 20, in some embodiment, the apparatus may also include:
a third indication receiving module 2001, configured to receive third indication information sent by the base station; and
a second repetition determining module 2002, configured to determine whether to perform repetition on the random access message based on the third indication information.

In an embodiment, the second repetition determining module is configured to determine whether to perform repetition on the random access message based on information carried in the third indication information;
or
to determine whether to perform repetition on the random access message based on a length of the third indication information.

With regard to the apparatus in the above embodiments, a detailed way for each module performing operations is described in embodiments of the related method, which is not described in detail here.

For the apparatus embodiment, since the apparatus embodiment basically corresponds to the method embodiment, description of the method embodiment for relevant points may be referred to. The apparatus embodiments described above are only exemplary, in which modules described as separate components may or may not be physically separated, and components displayed as modules may or may not be physical modules, that is, located in a place or distributed to multiple network modules. Some or all of the modules may be selected based on an actual need to achieve the purpose of embodiments. The skilled in the art can understand and implement embodiments without creative labor.

Embodiments of the disclosure also provide an electronic device, including:
a processor; and
a memory, configured to store instructions executable by the processor.

The processor is configured to perform the method for indicating repetition of a random access message according to any one of the above embodiments, and/or the method for repetition of a random access message according to any one of the above embodiments.

Embodiments of the disclosure also provide a computer readable storage medium. A computer program is stored on the computer readable storage medium. When the computer program is executed by a processor, steps in the method for indicating repetition of a random access message according to any one of the above embodiments, and/or steps in the method for repetition of a random access message according to any one of the above embodiments are implemented.

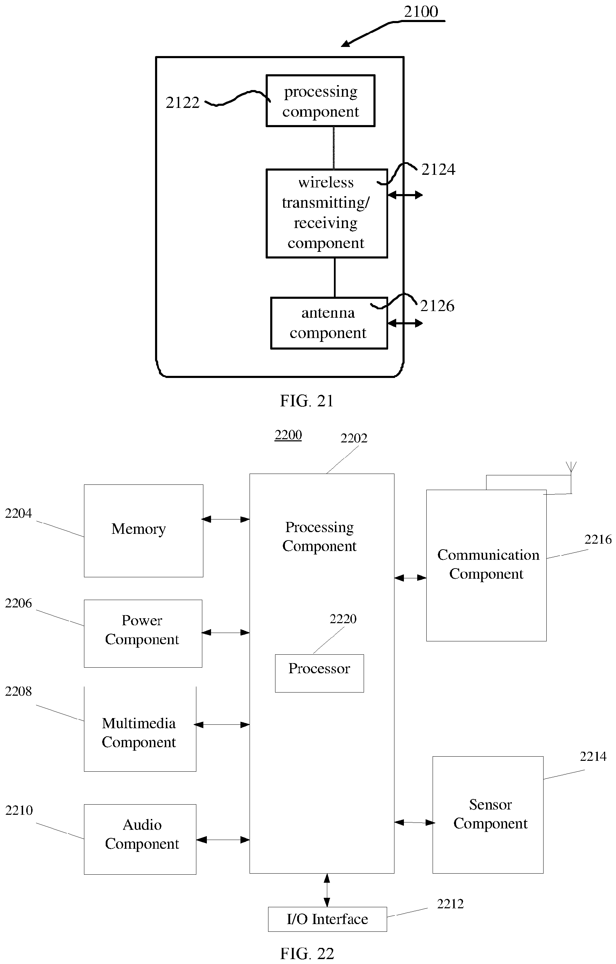

As illustrated in FIG. 21, FIG. 21 is a block diagram illustrating a device 2100 for indicating repetition of a random access message according to embodiments of the disclosure. The device 2100 may be provided as a base station. Referring to FIG. 21, the device 2100 includes a processing component 2122, a wireless transmitting/receiving component 2124, an antenna component 2126, and a signal processing part unique to a wireless interface. The processing component 2122 may further include one or more processors. One of the processors in the processing component 2122 may be configured to implement the method for indicating repetition of a random access message according to any one of the above embodiments.

FIG. 22 is a block diagram illustrating a device 2200 for repetition of a random access message according to embodiments of the disclosure. For example, the device 2200 may be a mobile phone, a computer, a digital broadcast terminal, a messaging receiving/transmitting device, a gaming console, a tablet, a medical device, exercise equipment, a personal digital assistant, and the like.

Referring to FIG. 22, the device 2200 may include one or more of the following components: a processing component 2202, a memory 2204, a power component 2206, a multimedia component 2208, an audio component 2210, an input/output (I/O) interface 2212, a sensor component 2214, and a communication component 2216.

The processing component 2202 typically controls overall operations of the device 2200, such as the operations associated with display, telephone calls, data communications, camera operations, and recording operations. The processing component 2202 may include one or more processors 2220 to execute instructions so as to perform all or a part of the steps in the above methods for repetition of a random access message. Moreover, the processing component 2202 may include one or more modules which facilitate the interaction between the processing component 2202 and other components. For instance, the processing component 2202 may include a multimedia module to facilitate the interaction between the multimedia component 2208 and the processing component 2202.

The memory 2204 is configured to store various types of data to support the operation of the device 2200. Examples of such data include instructions for any applications or methods operated on the device 2200, contact data, phonebook data, messages, pictures, videos, etc. The memory 2204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 2206 is configured to provide power to various components of the device 2200. The power component 2206 may include a power management system, one or more power sources, and other components associated with the generation, management, and distribution of power in the device 2200.

The multimedia component 2208 includes a screen configured to provide an output interface between the device 2200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 2208 includes a front camera and/or a rear camera. The front camera and/or the rear camera may receive an external multimedia datum when the device 2200 is in an operation mode such as a photographing mode or a video mode. Each of the front camera and the rear camera may be a fixed optical lens system or have focus and optical zoom capability.

The audio component 2210 is configured to output and/or input audio signals. For example, the audio component 2210 includes a microphone (MIC) configured to receive an external audio signal when the device 2200 is in an operation mode, such as a call mode, a recording mode, and a voice recognition mode. The received audio signal may be further stored in the memory 2204 or transmitted via the communication component 2216. In some embodiments, the audio component 2210 also includes a loud speaker to output audio signals.

The I/O interface 2212 is configured to provide an interface between the processing component 2202 and peripheral interface modules, such as a keyboard, a click wheel, buttons, and the like. The buttons may include, but are not limited to, a home button, a volume button, a starting button, and a locking button.

The sensor component 2214 includes one or more sensors to provide status assessments of various aspects of the device 2200. For instance, the sensor component 2214 may detect an on/off status of the device 2200, relative positioning of components, such as, a display screen and a keypad of the device 2200. The sensor component 2214 may also detect a change in position of the device 2200 or a component of the device 2200, a presence or absence of user contact with the device 2200, an orientation or an acceleration/deceleration of the device 2200, and a change in temperature of the device 2200. The sensor component 2214 may include a proximity sensor configured to detect the presence of nearby objects without any physical contact. The sensor component 2214 may further include a light sensor, such as a CMOS or CCD image sensor, for use in imaging applications. In some embodiments, the sensor component 2214 may also include an accelerometer sensor, a gyroscope sensor, a magnetic sensor, a pressure sensor, or a temperature sensor.

The communication component 2216 is configured to facilitate a wired or wireless communication between the device 2200 and other terminals. The device 2200 can access a wireless network based on a communication standard, such as WiFi, 2G, or 3G, 4G LTE, 5G NR or a combination thereof. In an exemplary embodiment, the communication component 2216 receives a broadcast signal or broadcast associated information from an external broadcast control system via a broadcast channel. In an exemplary embodiment, the communication component 2216 also includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, or other technologies.

In exemplary embodiments, the device 2200 may be implemented with one or more electronic elements such as application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods for repetition of a random access message.

In exemplary embodiments, there is also provided a non-transitory computer readable storage medium including instructions, such as the memory 2204 including instructions. The instructions may be executed by the processor 2220 in the device 2200 to perform the above methods for repetition of a random access message. For example, the non-transitory computer-readable storage medium may be a ROM, a RAM, a CD-ROM, a magnetic tape, a floppy disc, an optical data storage device, and the like.

Other embodiments of the disclosure will be apparent to those skilled in the art from consideration of the specification and practice of the disclosure disclosed here. This disclosure is intended to cover any variations, uses, or adaptations of the disclosure following the general principles thereof and including such departures from the disclosure as come within known or customary practice in the art. It is intended that the specification and embodiment may be considered as example only, with a true scope and spirit of the disclosure being indicated by the following claims.

It should be noted that the disclosure is not limited to the exact construction that has been described above and illustrated in the accompanying drawings, and that various modifications and changes can be made without departing from the scope thereof. It is intended that the scope of the disclosure only be limited by the appended claims.

It should be understood that, in the context, relational terms such as "first" and "second" are only used to distinguish one entity or operation from another entity or operation, and do not necessarily require or imply that there is any such actual relationship or order between these entities or operations. It further should be noted that, terms "including", "comprising" or any other variant thereof are intended to cover a non-exclusive inclusion, such that procedures, methods, products or devices including a series of elements not only include those elements, but also include other elements not explicitly listed, or further includes elements inherent in such procedures, methods, products, or devices. Without more restrictions, sentence "includes one..." defines one element, but it is not excluded that there are additional identical elements in the procedures, methods, products, or devices that includes the element.

Detailed description has been made above to the methods and apparatus provided by embodiments of the disclosure. The principle and implementation of the disclosure have been expounded with specific examples. The description of the above embodiments is only used to help understand the methods and core ideas of the disclosure. Meanwhile, for the skilled in the art, there will be changes in the specific implementation and the application scope based on the idea of the disclosure. In conclusion, the contents of the specification should not be understood as limitations to the disclosure.

## Claims

1. A method for indicating repetition of a random access message, applicable to a base station, comprising:
sending first indication information to a terminal, wherein the first indication information is configured to indicate a configuration for the repetition of the random access message.

2. The method of claim 1, wherein the first indication information is located in a newly added field, or multiplexed in an existing field.

3. The method of claim 2, wherein the first indication information is index information or number information.

4. The method of claim 3, wherein the index information is configured to indicate the configuration for the repetition of the random access message in a list;
wherein the list is a newly added list or an existing list, and information representing the configuration for the repetition of the random access message is newly added in the existing list.

5. The method of claim 4, wherein the list is pre-determined or indicated to the terminal by system information.

6. The method of claim 4, wherein the existing list is a time domain resource allocation list or a default table A.

7. The method of claim 4, wherein the random access message is a third message in random access Msg3, and the index information is located in a second message in random access Msg2.

8. The method of claim 7, wherein the list is the existing list, and the index information is located in a target field related to the existing list in the Msg2.

9. The method of claim 8, wherein the index information is further located in a newly added field of the target field, or in a transmission power control field of the Msg2.

10. The method of claim 7, wherein the list is the newly added list, and the index information is located in a newly added field related to the newly added list in the Msg2, or in a transmission power control field of the Msg2.

11. The method of claim 4, further comprising:
sending second indication information to the terminal, wherein the second indication information is configured to indicate the terminal to perform repetition again on the random access message.

12. The method of claim 11, wherein the second indication information is further configured to indicate a configuration for the repetition performed again on the random access message in the list.

13. The method of any of claims 1 to 12, further comprising:
sending third indication information to the terminal, wherein the third indication information is configured to indicate the terminal whether to perform repetition on the random access message.

14. A method for repetition of a random access message, applicable to a terminal, comprising:
receiving first indication information sent by a base station; and
determining a configuration for the repetition of the random access message based on the first indication information.

15. The method of claim 14, wherein the first indication information is located in a newly added field, or multiplexed in an existing field.

16. The method of claim 15, wherein the first indication information is index information or frequency information.

17. The method of claim 16, wherein the index information is configured to indicate the configuration for the repetition of the random access message in a list;
wherein the list is a newly added list or an existing list, and information representing the configuration for the repetition of the random access message is newly added in the existing list.

18. The method of claim 17, wherein the list is pre-determined or determined based on system information.

19. The method of claim 17, wherein the existing list is a time-domain resource allocation list or a preset table A.

20. The method of claim 17, wherein the random access message is a third message in random access Msg3, and the index information is located in a second message in random access Msg2.

21. The method of claim 20, wherein the list is the existing list, and the index information is located in a target field related to the existing list in the Msg2.

22. The method of claim 21, wherein the index information is further located in a newly added field of the target field, or in a transmission power control field of the Msg2.

23. The method of claim 20, wherein the list is the newly added list, and the index information is located in a newly added field related to the newly added list in the Msg2, or in a transmission power control field of the Msg2.

24. The method of claim 17, further comprising:
receiving second indication information sent by the base station; and
determining whether to perform repetition again on the random access message based on the second indication information.

25. The method of claim 24, further comprising:
determining a configuration for the repetition performed again on the random access message in the list based on the second indication information.

26. The method of claim 14, further comprising:
determining a configuration for a repetition performed again on the random access message based on the configuration for the repetition of the random access message and a preset calculation mode.

27. The method of claim 14, further comprising:
determining whether to perform repetition again on the random access message based on a measurement result of a signal sent by the base station.

28. The method of any of claims 14 to 27, further comprising:
receiving third indication information sent by the base station; and
determining whether to perform repetition on the random access message based on the third indication information.

29. The method of claim 28, wherein determining whether to perform repetition on the random access message based on the third indication information comprises:
determining whether to perform repetition on the random access message based on information carried in the third indication information;
or
determining whether to perform repetition on the random access message based on a length of the third indication information.

30. An apparatus for indicating repetition of a random access message, applicable to a base station, comprising:
a first indicating module, configured to send first indication information to a terminal, wherein the first indication information is configured to indicate a configuration for the repetition of the random access message.

31. An apparatus for repetition of a random access message, applicable to a terminal, comprising:
a first indication receiving module, configured to receive first indication information sent by a base station; and
a first configuration determining module, configured to determine a configuration for the repetition of the random access message based on the first indication information.

32. An electronic device, comprising:
a processor; and
a memory, configured to store instructions executable by the processor,
wherein the processor is configured to perform the method for indicating repetition of a random access message according to any of claims 1-13 or the method for repetition of a random access message according to any of claims 14-29.

33. A computer readable storage medium having a computer program stored thereon, wherein, when the computer program is executed by a processor, steps of the method for indicating repetition of a random access message according to any of claims 1-13 or steps of the method for repetition of a random access message according to any of claims 14-29 are implemented.
